# EUROPEAN PATENT SPECIFICATION

(11) **EP 3 144 225 B1**
(45) Date of publication and mention of the grant of the patent: **13.06.2018**
(21) Application number: 16194056.4
(22) Date of filing: 03.02.2014
(51) Int. Cl.: B64D 13/06, F24F 7/10, B64D 13/00, B64D 11/06

(54) **AIRCRAFT CIRCULATION SYSTEM FOR PASSENGER CABINS**
FLUGZEUGZIRKULATIONSSYSTEM FÜR PASSAGIERKABINEN
SYSTÈME DE CIRCULATION D'AÉRONEF POUR CABINES DE PASSAGERS

(30) Priority: 04.03.2013 US 201313783664
(43) Date of publication of application: 22.03.2017
(62) Divisional of application: 14707005.6
(73) Proprietor: The Boeing Company, Chicago, IL 60606-2016 (US)
(72) Inventor: KELEHER, Andrew P, SEATTLE, 98124-2207 (US); EISELE, Gregory T, EVERETT, 98204-1910 (US)
(74) Representative: Cabinet Plasseraud

(56) References cited:
- EP-A2- 0 239 548
- WO-A2-2005/052459
- GB-A- 489 423
- GB-A- 1 204 594
- GB-A- 2 275 768
- US-A1- 2012 318 918
- US-B1- 6 189 831

## Description

### BACKGROUND INFORMATION

### Field:

The present disclosure relates generally to aircraft and, in particular, to environmental systems in aircraft. Double particular, the present disclosure relates to a method and apparatus for circulating air in a passenger cabin of an aircraft.

### Background:

The environmental control system of an aircraft controls the air supply, temperature, and pressure in the aircraft. In managing the air supply, areas such as the passenger cabin are designed to circulate air within the passenger cabin.
With respect to circulating air, vents, grills, ducts, fans and other devices are located within and around the passenger cabin. The passenger cabin is typically open and air circulates freely within the passenger cabin without obstructions such system is described in a document WO 2005/052459 A2 for instance.
In some aircraft, suites are provided within the cabin. Suites may be found in first-class passenger cabins. These suites are private sitting areas. A suite may provide a private seating area for one or more persons. This private sitting area may be formed by installing walls in a passenger cabin. These walls may cover three or more sides to provide a desired level of privacy and passenger comfort.

A suite typically has two doors that move to open and close. The presence of suites in the passenger cabin, however, may reduce the flow of air that circulates within the passenger cabin. The height of the walls and the suite doors affect the flow of air in the entire passenger cabin. As a result, air stagnation and temperature stratification may occur within the suite, in the aisles outside of the suite, and in other areas of the passenger cabin.

Currently, a suite may have louvers on the doors to provide for ventilation of air. Additionally, the suite also may include one or more gasper air outlets. These currently used mechanisms, however, often do not provide a desired circulation within the passenger cabin. Therefore, it would be desirable to have a method and apparatus that takes into account at least some of the issues discussed above, as well as other possible issues.

### SUMMARY

In one illustrative embodiment, an apparatus comprises a passenger cabin which comprises a suite and an inlet system, an outlet system, and a fan system, according to claim 1. The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
**Figure 1** is an illustration of an aircraft in accordance with an illustrative embodiment;
**Figure 2** is an illustration of a block diagram of an air circulation environment in accordance with an illustrative embodiment;
**Figure 3** is an illustration of an inlet system in accordance with an illustrative embodiment;
**Figure 4** is an illustration of an outlet system in accordance with an illustrative embodiment;
**Figure 5** is an illustration of a fan system in accordance with an illustrative embodiment;
**Figure 6** is an illustration of an exterior view of a suite in accordance with an illustrative embodiment;
**Figure 7** is another illustration of an exterior view of a suite in accordance with an illustrative embodiment;
**Figure 8** is an illustration of an interior view of a suite in accordance with an illustrative embodiment;
**Figure 9** is another illustration of an interior view of a suite in accordance with an illustrative embodiment;
**Figure 10** is an illustration of a circulation unit in accordance with an illustrative embodiment;
**Figure 11** is another illustration of a circulation unit in accordance with an illustrative embodiment;
**Figure 12** is a cross-sectional view of a suite within an aircraft in accordance with an illustrative embodiment;
**Figure 13** is an illustration of flowchart of a process for circulating air in a passenger cabin in accordance with an illustrative embodiment;
**Figure 14** is an illustration of an aircraft manufacturing and service method in accordance with an illustrative embodiment; and
**Figure 15** is an illustration of an aircraft in which an illustrative embodiment may be implemented.

### DETAILED DESCRIPTION

The illustrative embodiments recognize and take into account one or more different considerations. Illustrative embodiments recognize and take into account that the louvers in the doors of a suite do not provide for active movement of air. Any airflow through the louvers is passive and may not provide a desired level of circulation of air in the passenger cabin. Additionally, the illustrative embodiments also recognize and take into account that the gasper air outlets are designed for providing airflow to the face of a passenger or some other portion of the passenger. These gasper air outlets are not designed to facilitate airflow within the passenger cabin in a manner that provides desired circulation of air.

Thus, the illustrative embodiments provide a method and apparatus for circulating air in a passenger cabin. In one illustrative embodiment, an apparatus comprises an input system, an outlet system, and a fan system. The inlet system is configured to receive air in a passenger cabin of an aircraft in a location outside of a suite. The outlet system is configured to output air received by the inlet system into the interior of the suite. The fan system is configured to cause the movement of the air into the inlet system and out of the outlet system. The movement of the air causes a desired circulation of air within the passenger cabin.

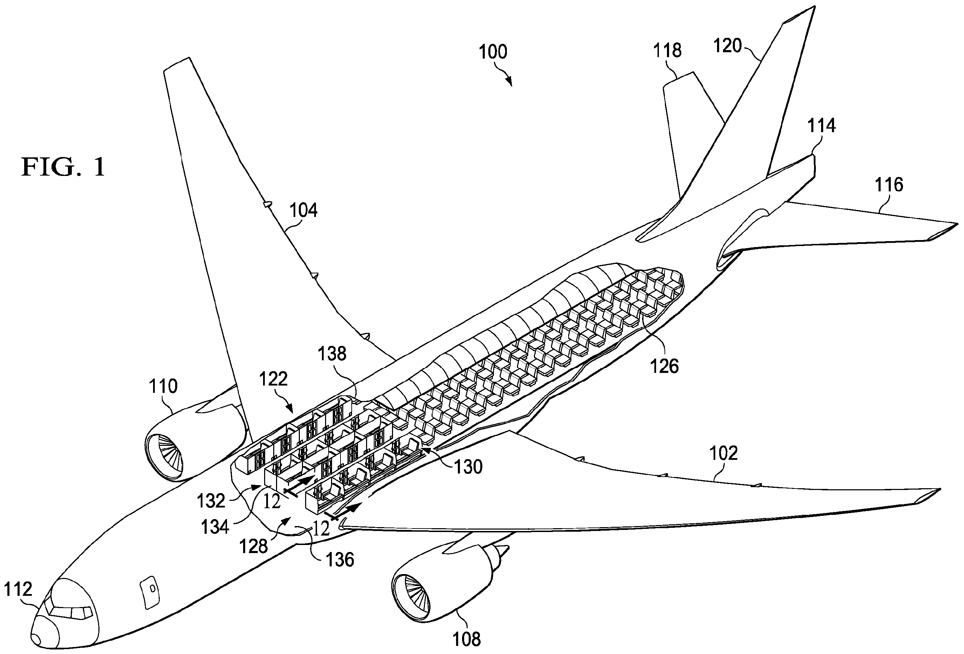

With reference now to the figures, and in particular, with reference to **Figure 1****,** an illustration of an aircraft is depicted in accordance with an illustrative embodiment. In this illustrative example, aircraft **100** has wing **102** and wing **104** attached to body **106.** Aircraft **100** includes engine **108** attached to wing **102** and engine **110** attached to wing **104.**

Body **106** has nose section **112** and tail section **114.** Horizontal stabilizer **116,** horizontal stabilizer **118,** and vertical stabilizer **120** are attached to tail section **114** of body **106.**

In this illustrative example, passenger cabin **122,** passenger cabin **124** and passenger cabin **126** are shown in an exposed view of aircraft **100.** As depicted, passenger cabin **122** is a first-class passenger cabin and includes suites **128** in addition to seats **130.**

In this illustrative example, suites **128** are private sitting areas located in passenger cabin **122.** These private sitting areas may seat one or more passengers.

For example, suite **132** includes a seat (not shown) surrounded by walls **134.** Walls **134** extend upward from floor **136** of passenger cabin **122** without reaching ceiling **138** in passenger cabin **122.**

In the illustrative examples, an air circulation system may be implemented within passenger cabin **122.** The air circulation system may provide a desired circulation of air within passenger cabin **122** containing suites **128.**

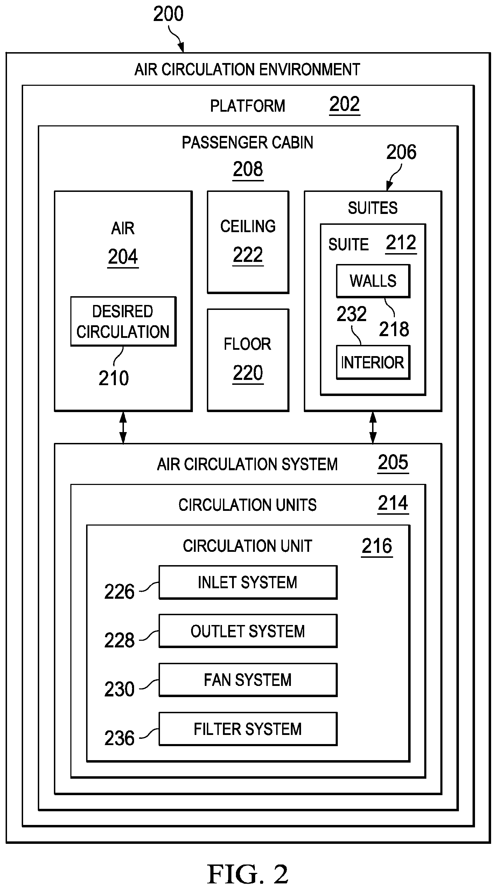

Turning next to **Figure 2****,** an illustration of a block diagram of an air circulation environment is depicted in accordance with an illustrative embodiment. As depicted, air circulation environment **200** includes platform **202** in which air **204** may circulate. In this illustrative example, air **204** may circulate within passenger cabin **208** in platform **202.** In this illustrative example, platform **202** may take the form of aircraft **100** illustrated in **Figure 1****.**

In the illustrative examples, the circulation of air **204** may be facilitated by air circulation system **205.** In this illustrative example, air circulation system **205** may be associated with suites **206** in passenger cabin **208.** With air circulation system **205,** desired circulation **210** of air **204** may occur within passenger cabin **208.** Desired circulation **210** may be a circulation of air **204** such that passenger cabin **208** may reduce or avoid stagnant air, temperature stratification, or other undesirable conditions within suite **212,** other suites in suites **206,** or other areas within passenger cabin **208** that may result in an undesired experience for passengers.

In one illustrative example, air circulation system **205** may be implemented in suite **212** within suites **206.** In particular, air circulation system **205** may comprise circulation units **214.** For example, circulation unit **216** in circulation units **214** may be associated with suite **212.**

When one component is "associated" with another component, the association is a physical association in the depicted examples. For example, a first component may be considered to be associated with a second component by being secured to the second component, bonded to the second component, mounted to the second component, welded to the second component, fastened to the second component, and/or connected to the second component in some other suitable manner. The first component also may be connected to the second component using a third component. The first component may also be considered to be associated with the second component by being formed as part of and/or an extension of the second component.

As depicted, suite **212** has walls **218** extending upward from floor **220** of passenger cabin **208** without reaching ceiling **222** of passenger cabin **208.** In other words, an open area is present between top of walls **218** and ceiling **222** in these illustrative examples.

In the illustrative example, air circulation system **205** includes a number of different components. For example, air circulation system **205** includes inlet system **226,** outlet system **228,** and fan system **230.**

Inlet system **226** is configured to receive air **204** in passenger cabin **208** in a location outside of suite **212.** A part of inlet system **226** is in the location outside of suite **212** to receive air **204** in the location outside of suite **212.** Outlet system **228** is configured to output air **204** received by inlet system **226** into interior **232** of suite **212.** Fan system **230** is configured to cause a movement of air **204** into inlet system **226** from outside of suite **212.** Fan system **230** is further configured to move air **204** received through inlet system **226** out of outlet system **228** into interior **232** of suite **212.**

As another illustrative example, circulation unit **216** also may include other components in addition to or in place of the ones illustrated. For example, circulation unit **216** also may include filter system **236.**

Filter system **236** may be implemented using a number of different components. For example, filter system **236** may include an air filter configured to remove particles such as dust, pollen, mold, and bacteria from the air. In some illustrative examples, the air filter may also be a chemical air filter that includes a catalyst to remove various volatile organic compounds or ozone. In still other illustrative examples, filter system **236** also may include an ultraviolet light unit configured to render bacteria and other undesired particles inert.

In these illustrative examples, the movement of air **204** by circulation unit **216** may cause air **204** in interior **232** of suite **212** to move upward in suite **212.** This movement of air **204** in suite **212** may be upward and over walls **218.** This movement of air **204** may cause air **204** in suite **212** to mix with air **204** outside of suite **212** in passenger cabin **208.** In this manner, desired circulation **210** of air **204** may occur within passenger cabin **208.**

Thus, with the use of air circulation system **205** and, in particular, circulation units **214,** desired circulation **210** may occur within passenger cabin **208.** Desired circulation **210** may occur even with the presence of suites **206** blocking portions of passenger cabin **208.**

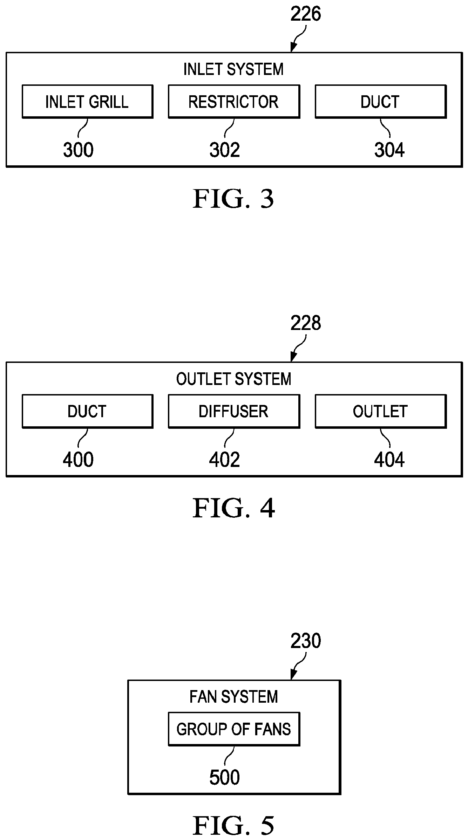

Turning next to **Figure 3****,** an illustration of an inlet system is depicted in accordance with an illustrative embodiment. An illustration of components that may be used to implement inlet system **226** in **Figure 2** is shown in this figure. As depicted, inlet system **226** includes a number of different components. In one illustrative example, inlet system **226** includes inlet grill **300,** restrictor **302,** and duct **304.**

Inlet grill **300** is located on a wall in walls **218** outside of suite **212.** Inlet grill **300** provides an opening to receive air **204** in **Figure 2****.** In these illustrative examples, the area of inlet grill **300** is shaped such that movement of air **204** into inlet grill **300** from the main passenger aisle of platform **202** is substantially imperceptible to a person near inlet grill **300.** In other words, inlet grill **300** is shaped such that a draft is not felt by persons in the main passenger aisle of platform **202.** As depicted, restrictor **302** is connected to inlet grill **300.** In these illustrative examples, restrictor **302** is configured to connect inlet grill **300** to duct **304.**

Duct **304** is a channel that provides a connection from restrictor **302** to fan system **230** in **Figure 2****.** In these depicted examples, duct **304** is smaller than inlet grill **300** in platform **202.** As a result, an increase in velocity of air **204** as it passes through restrictor **302** into duct **304** occurs. The smaller size may be result of space restrictions in platform **202.**

Turning next to **Figure 4****,** an illustration of an outlet system is depicted in accordance with an illustrative embodiment. An illustration of components that may be used to implement outlet system **228** in **Figure 2** is shown in this figure. As depicted, outlet system **228** includes a number of different components. For example, outlet system **228** includes duct **400,** diffuser **402,** and outlet **404.** Duct **400** is configured to be connected to fan system **230** in **Figure 2****.** Duct **400** is also connected to diffuser **402** in this illustrative example.

Diffuser **402** is configured to reduce the velocity of air **204** received through duct **400** from fan system **230** in **Figure 2****.** Outlet **404** is an opening that is located inside suite **212.** Outlet **404** may take various forms. For example, outlet **404** may take the form of a grill, nozzle, or some other suitable type of opening.

In these illustrative examples, diffuser **402** is configured to reduce the velocity of air **204** entering suite **212** as air **204** is output from outlet **404.** This reduction in the velocity of air **204** may be such that the movement of air **204** in suite **212** is substantially imperceptible to a person in suite **212.** In the illustrative examples, the velocity of air **204** in suite **212** may be selected to avoid a feeling of draftiness by a passenger in suite **212.** For example, the velocities may be selected to avoid a feeling of draftiness on ankles, wrists, head, or other body parts of a passenger.

Turning next to **Figure 5****,** an illustration of a fan system is depicted in accordance with an illustrative embodiment. An illustration of components that may be used to implement fan system **230** in **Figure 2** are shown in this figure.

In this illustrative example, fan system **230** is comprised of a group of fans **500.** As used herein, "a group of", when used with reference items, means one or more items. For example, group of fans **500** is one or more fans.

As depicted in these illustrative examples, a fan in group of fans **500** may be a fan that has a brushless motor. Further, the fan may be selected to avoid generating undesired noise, fumes, smoke, or other undesired conditions when the fan does not operate as desired.

In these illustrative examples, group of fans **500** are comprised of the same type of fans or different fans when more than one fan is present in group of fans. Of course, different types of fans also may be used.

The illustration of air circulation environment **200** in the different components for air circulation system **205** in **Figures 2-5** are not meant to imply physical or architectural limitations to the manner in which an illustrative embodiment may be implemented. Other components in addition to or in place of the ones illustrated may be used. Some components may be unnecessary. Also, the blocks are presented to illustrate some functional components. One or more of these blocks may be combined, divided, or combined and divided into different blocks when implemented in an illustrative embodiment.

For example, although platform **202** has been described as taking the form of aircraft **100** in **Figure 1****,** platform **202** may take other forms. For example, platform **202** also may be selected from one of a surface ship, a cruise ship, a spacecraft, a train, or some other suitable type of platform.

In still other illustrative examples, one or more circulation units may be associated with suite **212** in addition to circulation unit **216.** For example, suite **212** may include two circulation units, four circulation units, or some other number of circulation units. The number of circulation units used may depend on the airflow needed for desired circulation **210** within passenger cabin **208.**

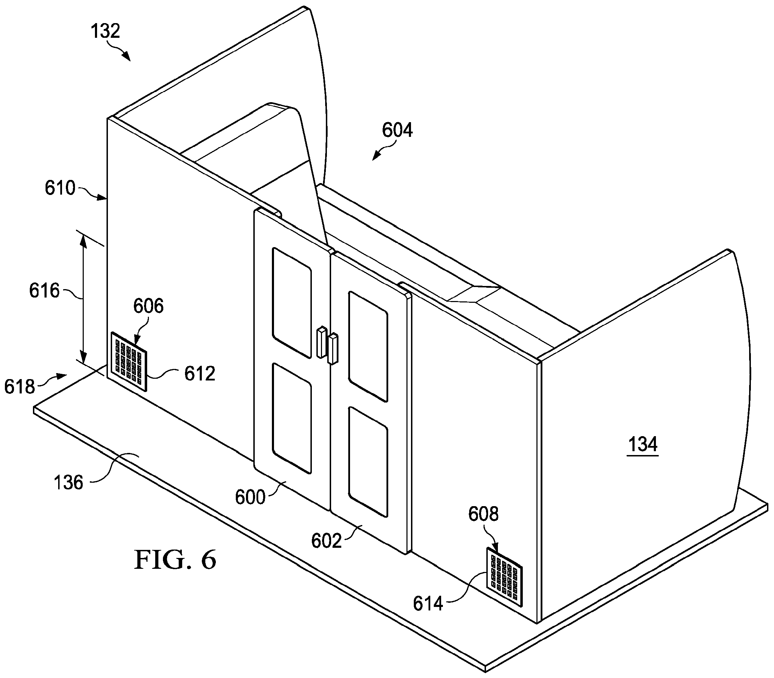

With reference now to **Figures 6-9****,** illustrations of a suite are depicted in accordance with an illustrative embodiment. In these illustrative examples, a more detailed illustration of suite **132** in passenger cabin **122** in **Figure 1** with two circulation units is shown.

Turning next to **Figure 6****,** an illustration of an exterior view of a suite is depicted in accordance with an illustrative embodiment. A more detailed illustration of suite **132** is shown in this view. As depicted, suite **132** also includes door **600** and door **602** to provide entry and exit from interior **604** of suite **132.**

Additionally, suite **132** also has circulation unit **606** and circulation unit **608.** A portion of the circulation units can be seen on exterior **610** of walls **134** in this view.
More specifically, inlet grill **612** in circulation unit **606** and inlet grill **614** in circulation unit **608** can be seen. As depicted, inlet grill **612** and inlet grill **614** are located on lower half **616** of exterior **610** of walls **134.** In these illustrative examples, inlet grill **614** may be located on a wall in walls **134** that is adjacent to aisle **618** in passenger cabin **122.**

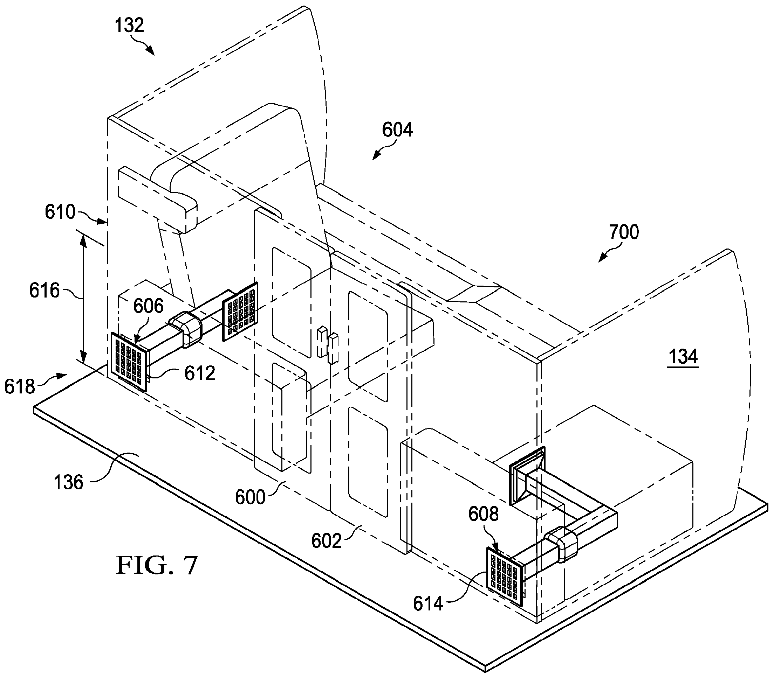

With reference now to **Figure 7****,** another illustration of an exterior view of a suite is depicted in accordance with an illustrative embodiment. In this depicted example, a transparent view of suite **132** is depicted. In this view of suite **132,** monuments **700** within interior **604** of walls **134** of suite **132** can be seen. In particular, circulation unit **606** and circulation unit **608** are configured to be located within monuments **700.** A monument is a structure. A monument may be attached to floor **136.** A monument may be, for example, a seat, cabinetry, a galley, a credenza, or other structures that may be present in a platform such as an aircraft.

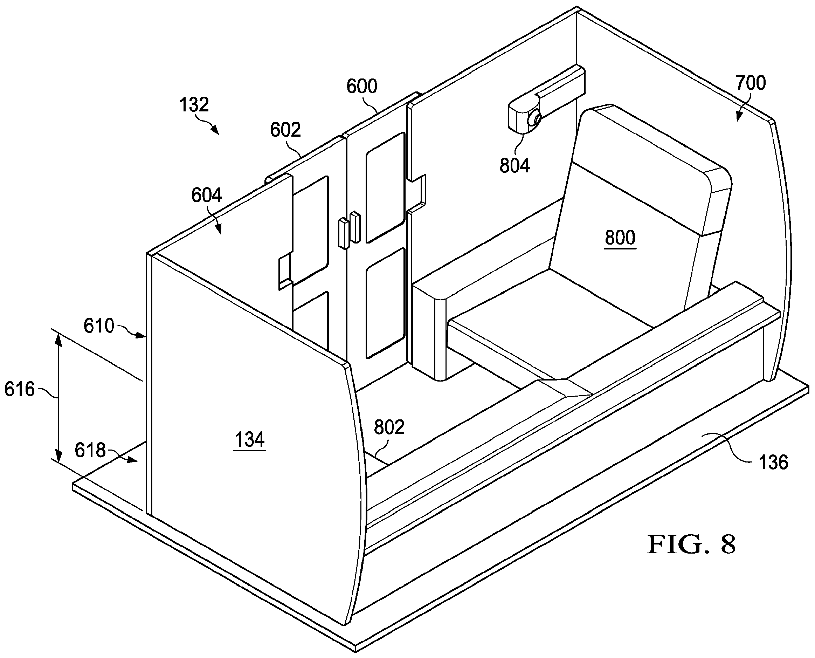

Turning next to **Figure 8****,** an illustration of an interior view of a suite is depicted in accordance with an illustrative embodiment. In this example, a view of interior **604** of suite **132** is shown. In this view, monuments **700** include seat **800** and bench **802.**

Also seen in this view is gasper unit **804.** Gasper unit **804** is configured to provide airflow to a passenger. In these illustrative examples, gasper unit **804** is not configured to aid in circulation of air within the passenger cabin.

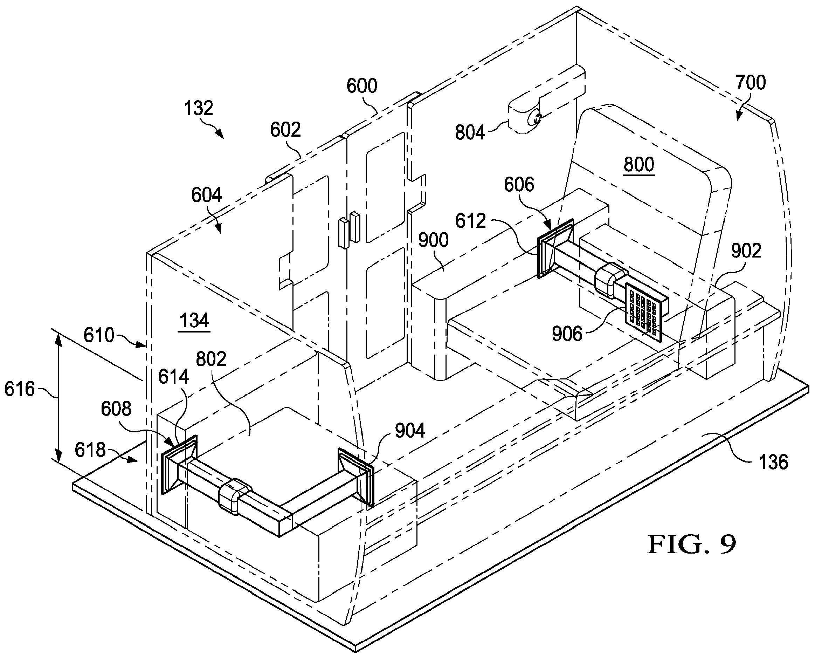

With reference now to **Figure 9****,** another illustration of an interior view of a suite is depicted in accordance with an illustrative embodiment. A transparent view of interior **604** of suite **132** is shown in this view. Circulation unit **606** and circulation unit **608** can be seen located within monuments **700.** As depicted in this view, circulation unit **608** is located within bench **802.** Circulation unit **606** extends through armrest **900** in seat **800** and light unit **902** located behind seat **800.** The location of circulation unit **608** within bench **802** reduces the visibility of circulation unit **608** to a passenger in suite **132.** Further, the placement of circulation unit **606** extending through armrest **900** and light unit **902** is an example of an inconspicuous location in suite **132.** In this manner, the aesthetics of suite **132** may be increased without a passenger seeing different components of circulation unit **606** and circulation unit **608.**

As can be seen in this transparent view, outlet **904** in circulation unit **608** is located on bench **802.** Outlet **906** in circulation unit **606** is located on light unit **902.** Outlet **906** is located on lower half **616** of walls **134** within interior **604** of suite **132.**

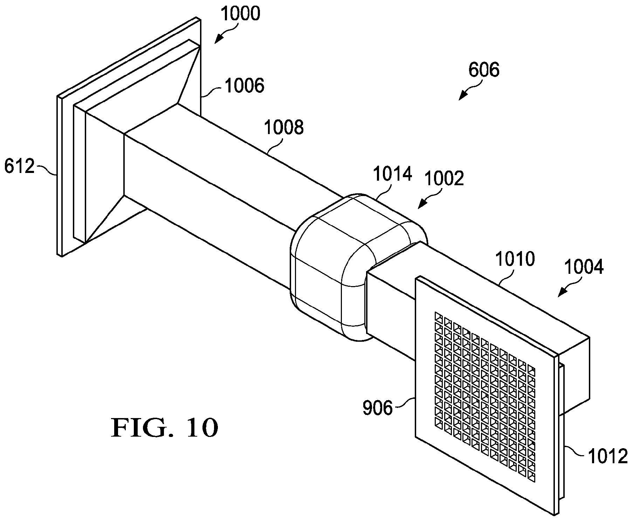

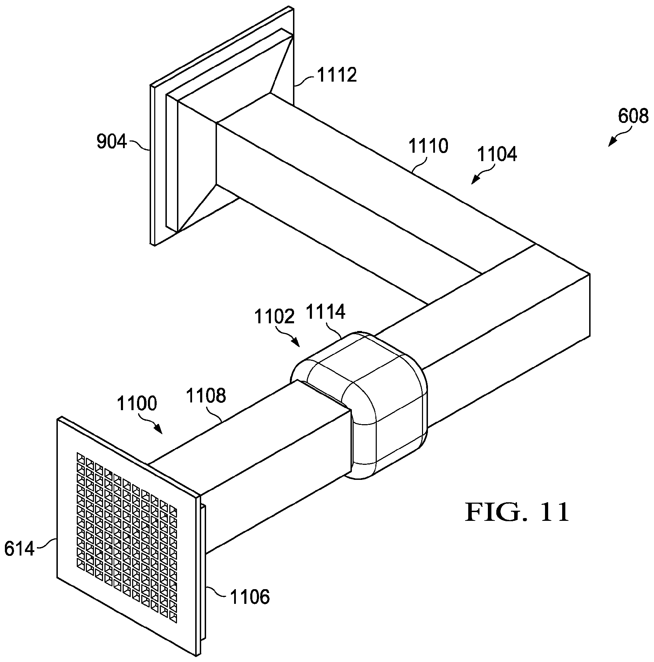

**Figure 10** and **Figure 11** are illustrations of circulation units that may be implemented in a suite in accordance with an illustrative embodiment. In **Figure 10****,** an illustration of a circulation unit is depicted in accordance with an illustrative embodiment. In this depicted example, an isometric view of circulation unit **606** is shown.
Circulation unit **606** has inlet system **1000,** fan system **1002,** and outlet system **1004.** Inlet system **1000** includes inlet grill **612,** restrictor **1006,** and duct **1008.** Outlet system **1004** comprises duct **1010,** diffuser **1012,** and outlet **906.**

As depicted, fan system **1002** comprises fan **1014.** Fan **1014** is connected to duct **1008** in inlet system **1000** and duct **1010** in outlet system **1004** in this illustrative example. Turning next to **Figure 11****,** another illustration of a circulation unit is depicted in accordance with an illustrative embodiment. An isometric view of circulation unit **608** is shown in this figure.

Circulation unit **608** is comprised of inlet system **1100,** fan system **1102,** and outlet system **1104.** Inlet system **1100** includes inlet grill **614,** restrictor **1106,** and duct **1108.** In this illustrative example, outlet system **1104** includes duct **1110,** diffuser **1112,** and outlet **904.**
Fan system **1102** is comprised of fan **1114.** Fan **1114** is connected to duct **1108** in inlet system **1100** and duct **1110** in outlet system **1104.**

With the location of circulation unit **606** and circulation unit **608** in lower half **616** of suite **132,** cooler air may be drawn into suite **132** as compared to placing these units in higher locations. Further, suites typically include multiple heat sources such as a video monitor, electronic boxes, seat actuators, armrest motors, in-flight entertainment systems (IFEs), and other devices that may generate heat. The cool air may be used to displace hot-air that rises in the suites in these illustrative examples.

Illustrations of suite **132,** circulation unit **606** and circulation unit **608** are not meant to imply limitations to the manner in which other illustrative embodiments may be implemented. For example, although two circulation units are illustrated, other numbers of circulation units may be used. In one illustrative example, only a single circulation unit may be used. In other examples, three or more circulation units may be associated with suite **132.**

As another illustrative example, the length and shape of the ducts also may vary. Although the ducts are shown having a square cross-section, other ducts may have other shapes. For example, the cross-section may be rectangular, circular, oval, or some other suitable shape.

In still other illustrative examples, a circulation unit may have more than one inlet or more than one outlet depending on the particular implementation. For example, two inlets may have ducts that connect to a fan. As another illustrative example, a filter system also may be included in one or more of the circulation units. The filter system may be included to remove particles or render biological particles in the air inert. The filter system may include, for example, an air filter, and ultraviolet light, and other suitable types of filter systems.

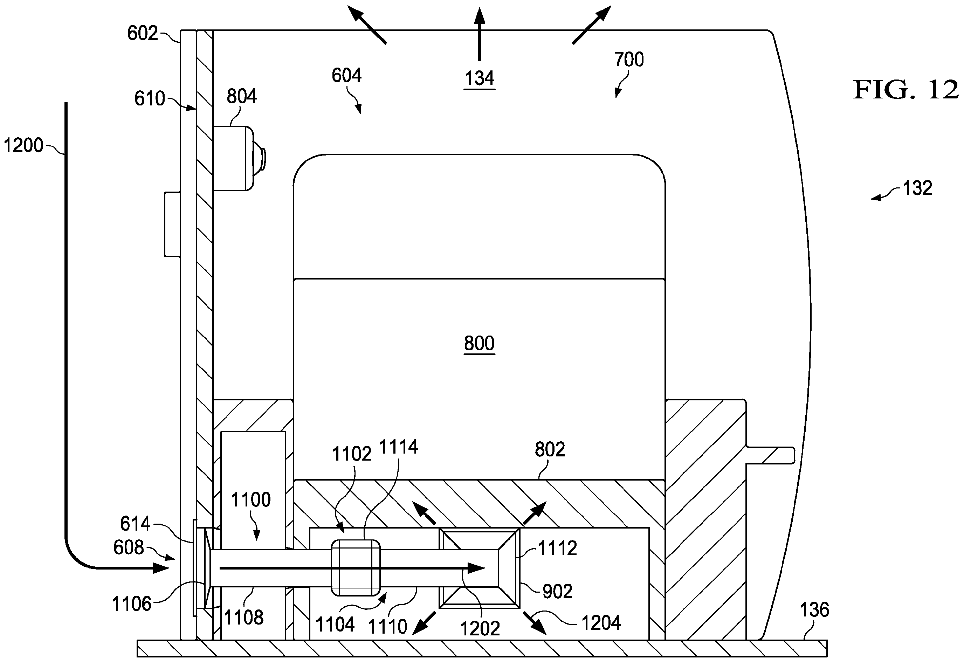

Turning now to **Figure 12****,** a cross-sectional view of a suite within an aircraft is depicted in accordance with an illustrative embodiment. In this depicted example, a cross-sectional view of suite **132 is** taken along lines **12-12** in **Figure** 1.

In this cross-sectional view, air may flow in the direction of arrow **1200** through inlet grill **614** into circulation unit **608.** This airflow may pass through restrictor **1106** and duct **1108** to reach fan **1114.**

As can be seen in this particular example, the air may then flow through duct **1110** to diffuser **1112** as depicted by arrow **1202.** The air then flows out of outlet **908** into interior **604** of suite **132** as shown by arrows **1204.** The air may then flow upward over the tops of walls **134** to mix with cabin air outside of suite **132** in passenger cabin **122.**

The different components shown in **Figures 1** and **6****-12** may be combined with components in **Figures 2-5****,** used with components in **Figures 2-5****,** or a combination of the two. Additionally, some of the components in **Figures 1** and **6****-12** may be illustrative examples of how components shown in block form in **Figures 2-5** can be implemented as physical structures.

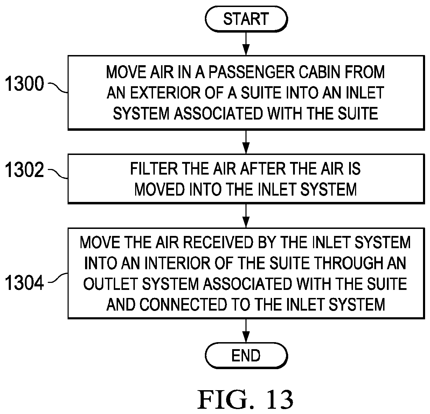

Turning next to **Figure 13****,** an illustration of a flowchart of a process for circulating air in a passenger cabin is depicted in accordance with an illustrative embodiment. The process illustrated in **Figure 13** may be implemented in air circulation environment **200** in **Figure 2****.** For example, one or more of the different operations in this flowchart may be implemented using one or more circulation units **214** in air circulation system **205.**

The process begins by moving air in a passenger cabin from an exterior of a suite into an inlet system associated with the suite (operation **1300**). The air is filtered after the air is moved into the inlet system (operation **1302**). The air received by the inlet system is moved into an interior of the suite through an outlet system associated with the suite and connected to the inlet system (operation **1304**) with the process terminating thereafter. In this illustrative example, the inlet system is indirectly connected to the outlet system by a fan system.

The different operations may cause a desired circulation of air within the passenger cabin. This process may be performed for one or more suites located in the passenger cabin. The flowcharts and block diagrams in the different depicted embodiments illustrate the architecture, functionality, and operation of some possible implementations of apparatuses and methods in an illustrative embodiment. In this regard, each block in the flowcharts or block diagrams may represent a module, a segment, a function, and/or a portion of an operation or step.

In some alternative implementations of an illustrative embodiment, the function or functions noted in the blocks may occur out of the order noted in the figures. For example, in some cases, two blocks shown in succession may be executed substantially concurrently, or the blocks may sometimes be performed in the reverse order, depending upon the functionality involved. Also, other blocks may be added in addition to the illustrated blocks in a flowchart or block diagram. For example, the filtering in operation **1302** may be amended in some steps.

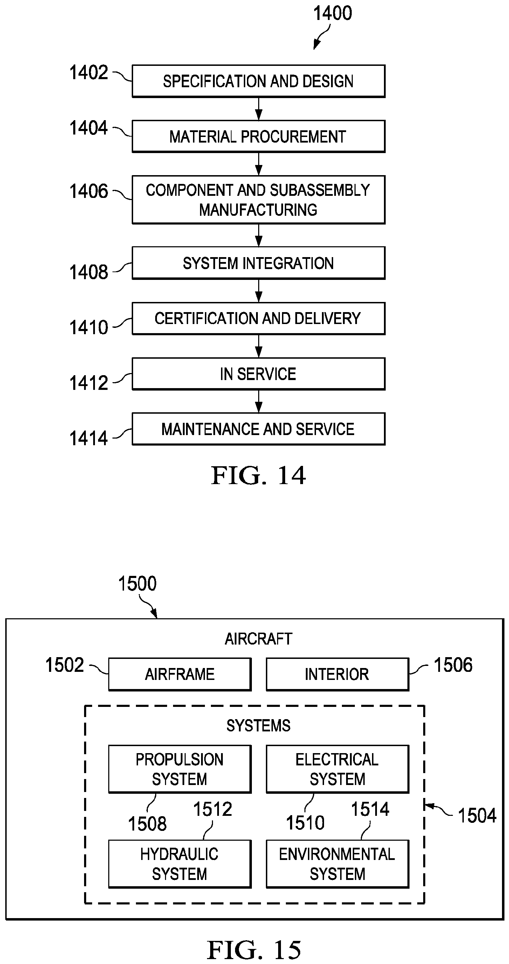

Illustrative embodiments of the disclosure may be described in the context of aircraft manufacturing and service method **1400** as shown in **Figure 14** and aircraft **1500** as shown in **Figure 15****.** Turning first to **Figure 14****,** an illustration of an aircraft manufacturing and service method is depicted in accordance with an illustrative embodiment. During pre-production, aircraft manufacturing and service method **1400** may include specification and design **1402** of aircraft **1500** in **Figure 15** and material procurement **1404.**

During production, component and subassembly manufacturing **1406** and system integration **1408** of aircraft **1500** in **Figure 15** takes place. Thereafter, aircraft **1500** in **Figure 15** may go through certification and delivery **1410** in order to be placed in service **1412.** While in service **1412** by a customer, aircraft **1500** in **Figure 15** is scheduled for routine maintenance and service **1414,** which may include modification, reconfiguration, refurbishment, and other maintenance or service.

Each of the processes of aircraft manufacturing and service method **1400** may be performed or carried out by a system integrator, a third party, and/or an operator. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 15****,** an illustration of an aircraft is depicted in which an illustrative embodiment may be implemented. In this example, aircraft **1500** is produced by aircraft manufacturing and service method **1400** in **Figure 14** and may include airframe **1502** with systems **1504** and interior **1506.** Examples of systems **1504** include one or more of propulsion system **1508,** electrical system **1510,** hydraulic system **1512,** and environmental system **1514.** Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method **1400** in **Figure 14****.** One or more illustrative embodiments may be implemented using system integration **1408** to install circulation units for a circulation system in suites in a passenger cabin in aircraft **1500.** Additionally, one or more illustrative embodiments may operate during in-service **1412** to provide desired air circulation within aircraft **1500.** Further, one or more illustrative embodiments may be implemented during maintenance and service **1414.** For example, circulation units may be added to suites in an aircraft. Circulation units may be installed when suites are installed during maintenance, refurbishment, upgrades, or other operations during maintenance and service **1414.**

Thus, one or more illustrative embodiments may provide a more natural desired airflow of air in the passenger cabin. The different illustrative embodiments do not have the complexity of environmental systems that draw air from outside of the aircraft. Instead, the circulation system in the illustrative embodiments may provide a desired flow of air in the cabin through circulation units that may be associated with suites. These circulation units may be installed in existing and new suites. Further, with the use of circulation units, the need for louvers in the doors and gasper units may be reduced or eliminated.

## Claims

1. An apparatus comprising:
- a passenger cabin;
- an inlet system (226) configured to receive air (204) in the passenger cabin (208);
- an outlet system (228) configured to output the air (204) received by the inlet system (226); and
- a fan system (230) configured to cause a movement of the air (204) into the inlet system (226) and out of the outlet system (228), wherein the movement of the air (204) causes a desired circulation (210) of the air (204) in the passenger cabin (208);
**characterized in that** said apparatus further comprises a suite (212) having a plurality of walls (218) extending upward from a floor (220) of said passenger cabin (208) without reaching a ceiling (222) of said passenger cabin (208), said inlet system (226) being configured to receive air (204) in a location outside of said suite (212) and said outlet system (228) being configured to output the air (204) received by said inlet system (226) into an interior (232) of the suite (212);
**in that** said inlet system comprises a restrictor (302), a duct (304) configured to be connected to said fan system (230) and an inlet grill (300) configured to provide an opening to receive air (204), wherein said inlet grill (300) is located on a lower half (616) of an exterior (610) of walls (218) of said suite (212);
**and in that** the outlet system (228) comprises a duct (304) configured to be connected to said fan system (230), a diffuser (402) and an outlet (404) located on a lower half (616) of said interior (232) of walls (218) of said suite (212).

2. The apparatus of claim 1 further comprising:
a filter system (236).

3. The apparatus of claim 1, wherein the fan system (230) comprises a group of fans (500).

4. The apparatus of claim 1, wherein the desired circulation (210) of the air (204) in the passenger cabin (208) is movement of the air (204) upward in the suite (212), wherein the air (204) in the suite (212) mixes with the air (204) outside of the suite (212).

5. The apparatus of claim 1, wherein the movement of the air (204) is substantially imperceptible to a person in the suite (212) .

6. The apparatus of claim 1, wherein the passenger cabin (208) is located in a platform (202) selected from one of the aircraft (100), a surface ship, a cruise ship, a spacecraft, and a train.

## Patentansprüche

1. Vorrichtung, die aufweist:
- eine Passagierkabine;
- ein Einlasssystem (226), das so konfiguriert ist, dass es Luft (204) in der Passagierkabine (208) aufnimmt;
- ein Auslasssystem (228), das so konfiguriert ist, dass es die durch das Einlasssystem (226) aufgenommene Luft (204) ausgibt; und
- ein Lüftersystem (230), das so konfiguriert ist, dass es eine Bewegung der Luft (204) in das Einlasssystem (226) und aus dem Auslasssystem (228) bewirkt, wobei die Bewegung der Luft (204) eine gewünschte Zirkulation (210) der Luft (204) in der Passagierkabine (208) bewirkt;
**dadurch gekennzeichnet, dass** die Vorrichtung ferner eine Suite (212) mit mehreren Wänden (218) aufweist, die sich von einem Boden (220) der Passagierkabine (208) nach oben erstrecken, ohne eine Decke (222) der Passagierkabine (208) zu erreichen, wobei das Einlasssystem (226) so konfiguriert ist, dass es Luft (204) an einer Stelle außerhalb der Suite (212) aufnimmt, und das Auslasssystem (228) so konfiguriert ist, dass es die durch das Einlasssystem (226) aufgenommene Luft in ein Inneres (232) der Suite (212) ausgibt;
dadurch, dass das Einlasssystem aufweist: einen Begrenzer (302), einen Kanal (304), der so konfiguriert ist, dass er mit dem Lüftersystem (230) verbunden ist, und ein Einlassgitter (300), das so konfiguriert ist, dass es eine Öffnung vorsieht, um Luft (204) aufzunehmen, wobei das Einlassgitter (300) auf einer unteren Hälfte (616) eines Äußeren (610) von Wänden (218) der Suite (212) liegt;
und dadurch, dass das Auslasssystem (228) aufweist: einen Kanal (304), der so konfiguriert ist, dass er mit dem Lüftersystem (230) verbunden ist, einen Verteiler (402) und einen Auslass (404), der auf einer unteren Hälfte (616) des Inneren (232) von Wänden (218) der Suite (212) liegt.

2. Vorrichtung nach Anspruch 1, die ferner aufweist:
ein Filtersystem (236).

3. Vorrichtung nach Anspruch 1, wobei das Lüftersystem (230) eine Gruppe von Lüftern (500) aufweist.

4. Vorrichtung nach Anspruch 1, wobei die gewünschte Zirkulation (210) der Luft (204) in der Passagierkabine (208) eine Aufwärtsbewegung der Luft (204) in der Suite (212) ist, wobei sich die Luft (204) in der Suite (212) mit der Luft (204) außerhalb der Suite (212) mischt.

5. Vorrichtung nach Anspruch 1, wobei die Bewegung der Luft (204) für eine Person in der Suite (212) im Wesentlichen nicht wahrnehmbar ist.

6. Vorrichtung nach Anspruch 1, wobei die Passagierkabine (208) in einer Plattform (202) liegt, die aus einer des Flugzeugs (100), eines Überwasserschiffs, eines Kreuzfahrtschiffs, eines Raumfahrzeugs und eines Zugs ausgewählt ist.

## Revendications

1. Appareil comprenant :
- une cabine passagers ;
- un système d'entrée (226) configuré pour recevoir de l'air (204) dans la cabine passagers (208) ;
- un système de sortie (228) configuré pour sortir l'air (204) reçu par le système d'entrée (226) ; et
- un système de ventilateur (230) configuré pour provoquer un mouvement de l'air (204) dans le système d'entrée (226) et hors du système de sortie (228), dans lequel le mouvement de l'air (204) provoque une circulation souhaitée (210) de l'air (204) dans la cabine passagers (208) ;
**caractérisé en ce que** ledit appareil comprend en outre une suite (212) présentant une pluralité de parois (218) s'étendant vers le haut depuis un sol (220) de ladite cabine passagers (208) sans atteindre un plafond (22) de ladite cabine passagers (208), ledit système d'entrée (226) étant configuré pour recevoir de l'air (204) dans un emplacement en dehors de ladite suite (212) et ledit système de sortie (228) étant configuré pour sortir l'air (204) reçu par ledit système d'entrée (226) dans un intérieur (232) de la suite (212) ;
**en ce que** ledit système d'entrée comprend un limiteur (302), un conduit (304) configuré pour être raccordé audit système de ventilateur (230) et une grille d'entrée (300) configurée pour fournir une ouverture pour recevoir de l'air (204), dans lequel ladite grille d'entrée (300) est située sur une moitié inférieure (616) d'un extérieur (610) de parois (218) de ladite suite (212) ;
et **en ce que** le système de sortie (228) comprend un conduit (304) configuré pour être raccordé audit système de ventilateur (230), un diffuseur (402) et une sortie (404) située sur une moitié inférieure (616) dudit intérieur (232) de parois (218) de ladite suite (212).

2. Appareil selon la revendication 1 comprenant en outre :
un système de filtre (236).

3. Appareil selon la revendication 1, dans lequel le système de ventilateur (230) comprend un groupe de ventilateurs (500).

4. Appareil selon la revendication 1, dans lequel la circulation souhaitée (210) de l'air (204) dans la cabine passagers (208) est le mouvement de l'air (204) vers le haut dans la suite (212), dans lequel l'air (204) dans la suite (212) se mélange avec l'air (204) en dehors de la suite (212).

5. Appareil selon la revendication 1, dans lequel le mouvement de l'air (204) est sensiblement imperceptible à une personne dans la suite (212).

6. Appareil selon la revendication 1, dans lequel la cabine passagers (208) est située dans une plateforme (202) sélectionnée parmi un de l'aéronef (100), un bateau de surface, un bateau de croisière, un engin spatial et un train.
